# EUROPEAN PATENT APPLICATION

(11) **EP 3 910 432 A1**
(43) Date of publication of application: **17.11.2021**
(21) Application number: 21169763.6
(22) Date of filing: 22.04.2021
(51) Int. Cl.: G05B 19/042

(54) **SYSTEM AND METHOD FOR REAL TIME HEALTH MONITORING OF A MACHINE COMPONENT**

(30) Priority: 15.05.2020 IN 202011020513
(71) Applicant: Caterpillar Inc., Peoria, IL 61629-9510 (US)
(72) Inventor: Singh, Amit, 201301 Noida (IN); Padhi, Lakshminarayana, 532001 Srikakulam (IN); Kumar, Ankit, 400094 Mumbai (IN)
(74) Representative: Boult Wade Tennant LLP

(57) **Abstract**

A method of monitoring health status of a machine component on a real time basis is provided. The method includes generating a first signal indicative of an operational characteristic of the machine component by at least one sensor module at regular predetermined intervals. The method includes receiving the first signal by at least one Internet of Things (IoT) module. The method includes converting the first signal from analog format to digital format by the at least one IoT module to generate a second signal. The method includes transmitting the second signal wirelessly by the at least one IoT module. The method includes receiving the second signal by a mobile device. The method includes processing the second signal by the mobile device to determine a real time health status of the machine component and displaying the real time health status of the machine component on the mobile device.

## Description

### Technical Field

The present disclosure generally relates to monitoring health status of a machine component. More specifically, the present disclosure relates to monitoring the health status of the machine component on a real time basis.

### Background

An important feature in modern work machines (e.g., fixed and mobile commercial machines, such as construction machines, fixed engine systems, marine-based machines, etc.) is detection and diagnosis of faults or errors in such machines. Machine faults may cause discomfort to operators handling the machines and may incur additional costs to business entities that use the machines in their particular commercial industry. Accordingly, systems have evolved to monitor and detect faults in the machines during operation.

Currently, such machines are provided with various systems and sub-systems including various sensors & switches, which help in providing machine health information to engine & machine control units. However, this information may not be readily available to end users, and mostly only a failure notification is provided. For example, in case of air filters for an engine, the information is only available when the filters are in a choked/clogged condition and in need of replacement, resulting in machine downtime. Further, air flow restriction from the air filter can increase engine pumping work and reduce machine fuel economy. To avoid such situations, air filters may have to be replace or cleaned in due time which may require periodic monitoring of a health status of the air filter.

U.S. Patent Number 10,119,886 describes a filtration monitoring system. The filtration monitoring system is an electronic system control module installed on an internal combustion engine or within a vehicle powered by the internal combustion engine. The filtration monitoring system monitors the health and status of the filtration systems present on the engine. The filtration monitoring system tracks filter loading patterns and predicts remaining service life of the filters by running smart algorithms based on sensor feedback.

Thus, the conventional machine systems lack a maintenance system which may provide information on operating parameters of serviceable components on a real time basis.

### Summary

In an aspect of the present disclosure, a method of monitoring health status of a machine component on a real time basis is provided. The method includes generating a first signal indicative of an operational characteristic of the machine component by a sensor module at regular predetermined intervals. The method also includes receiving the first signal by an Internet of Things (IoT) module. The method further includes converting the first signal from analog format to digital format by the IoT module to generate a second signal. The method includes transmitting the second signal by the IoT module wirelessly. The method also includes receiving the second signal by a mobile device. The method further includes processing the second signal by the mobile device to determine a real time health status of the machine component. Further, the method includes displaying the real time health status of the machine component on the mobile device.

In another aspect of the present disclosure, a system for monitoring health status of one or more machine components of a machine on a real time basis is provided. Each of the one or more machine components has an associated operational characteristic. The system includes one or more sensor modules communicably coupled to each of the one of more machine components. The sensor module generates a first signal at regular predetermined intervals indicative of the operational characteristic. The system also includes one or more IoT modules communicably coupled to each other either directly or indirectly. Each of the one or more IoT modules is communicably coupled with the one or more sensor modules. Each of the one or more IoT modules receives the first signal and converts the first signal from analog format to digital format to generate a second signal. Each of the one or more IoT modules transmits the second signal wirelessly. The system also includes a mobile device communicably coupled to any one of the one or more IoT modules. The mobile device receives the second signal and processes the second signal to determine a real time health status of the machine component. The mobile device further displays the real time health status of the machine component on the mobile device.

In yet another aspect of the present disclosure, a machine is provided. The machine includes a plurality of ground engaging members. The machine also includes a frame supported over the plurality of ground engaging members. The machine further includes one or more machine components having an associated operational characteristic. The machine includes a system for monitoring health status of the one or more machine components on a real time basis. The system includes one or more sensor modules communicably coupled to the machine component. The sensor module generates a first signal indicative of the operational characteristic at regular pre-determined intervals. The system also includes one or more IoT modules. Each of the one or more IoT modules is communicably coupled with the one or more sensor modules and another IoT module either directly or indirectly. Each of the one or more IoT modules receives the first signal and converts the first signal from analog format to digital format to generate a second signal. Each of the one or more IoT modules transmits the second signal wirelessly. The system further includes a mobile device communicably coupled to each of the one or more IoT modules. The mobile device receives the second signal and processes the second signal to determine a real time health status of the machine component. The mobile device further displays the real time health status of the machine component on the mobile device.

Other features and aspects of this disclosure will be apparent from the following description and the accompanying drawings.

### Brief Description of Drawings

FIG. 1 shows a schematic view of a system to determine health status of a machine component on a real time basis, according to an aspect of the present disclosure;
FIG. 2 shows a schematic view of another system to determine the real time health status of the machine component on a real time basis, according to an aspect of the present disclosure;
FIG. 3 schematically illustrates a system to determine the real time health status of the machine component for a machine, according to an aspect of the present disclosure;
FIG. 4 schematically illustrates multiple machines having a system to determine the real time health status of the machine component associated with a corresponding machine, according to an aspect of the present disclosure; and
FIG. 5 is a flowchart for a method of monitoring the real time health status of the machine component, according to an aspect of the present disclosure.

### Detailed Description

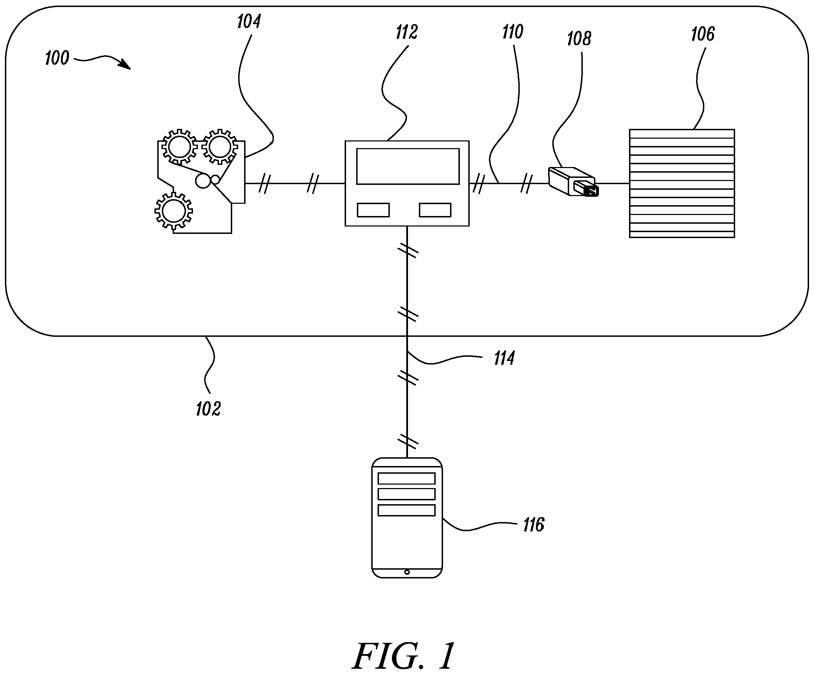

Wherever possible, the same reference numbers will be used throughout the drawings to refer to same or like parts. Referring to FIG. 1, some components associated with a machine 102 are schematically illustrated. The machine 102 may be used for a variety of earth moving operations, such as dozing, grading, leveling, bulk material removal, or any other type of similar operation. The machine 102 may be a dozer, a loader, a dump truck, an excavator, and the like. The machine 102 may be any construction or mining related vehicle, a marine application vehicle, a power generation module, or any other type of a machine which may be suitable for application with various aspects of the present disclosure. The present disclosure is not limited by application area of the machine 102 in any manner.

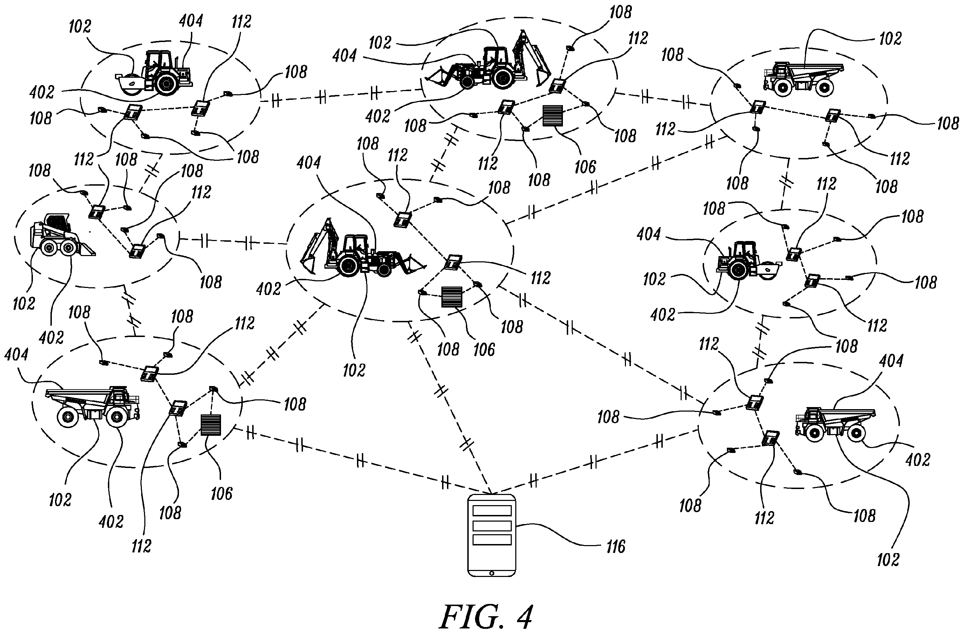

The machine 102 includes a number of ground engaging members 402 (see FIG. 4). The machine 102 may further include a frame 404 (shown in FIG. 4) supported over the ground engaging members 402. The machine 102 includes an engine 104 to provide power for operating the machine 102 as well as carrying out various auxiliary functions of the machine 102. The engine 104 may be any suitable type of an internal combustion engine suitable for application with various aspects of the present disclosure. The present disclosure is not limited by choice of the engine 104 in any manner. The engine 104 may further include a controller (not shown) associated with the engine 104. The controller may be any electronic controller, an engine control unit, a machine control unit, or a computing system. The controller may include a processor which operates to perform operations, executes control algorithms, stores data, retrieves data, gathers data, and/or performs any other computing or controlling task desired.

The controller may be a single controller or may include more than one controller disposed to control various functions and/or features of the machine 102. The controller includes an associated memory. The controller may be otherwise connected to an external memory, such as a database or server. The associated memory and/or external memory may include, but are not limited to including, one or more of read only memory (ROM), random access memory (RAM), a portable memory, and the like. The present disclosure may also be envisioned without a controller. It should be contemplated that the present disclosure does not depend upon the controller for critical functional steps. The teachings of the present disclosure may be applied to machines with or without such controllers.

The machine 102 includes various other components which may be required for the machine 102 to perform an intended function. However, such components are not being discussed as the present disclosure is not limited by any such components. The machine 102 includes one or more machine components 106. The machine component 106 is an air filter of the engine 104, a break wear sensor, and/or an implement wear sensor. The one or more machine components 106 have an associated operational characteristic. The operational characteristic may be any operational parameter which indicates about status of functioning of the machine component 106. For example, operational characteristic of an air filter may be considered as an inlet pressure, an outlet pressure, or a pressure difference across the air filter. When the air filter gets clogged, the aforementioned parameters may change and provide values which may be outside of a normal operating range, or greater than threshold values.

The machine 102 includes a system 100 for monitoring health status of the one or more machine components 106 on a real time basis. The system 100 includes the one or more machine components 106. Further, the system 100 includes one or more sensor modules 108. The sensor module 108 is communicably coupled to each of the one or more machine components 106. The sensor module 108 may include one or more sensors which may detect operational characteristic of the machine component 106. The sensor module 108 generates a first signal 110 at regular predetermined intervals indicative of the operational characteristic. The regular predetermined intervals may be defined based on various factors such as, but not limited to, a type of the machine component 106, a current life of the machine component 106, a history of real time health status of the machine component 106, operative criticality of the machine component and the like. In an embodiment, a user may also set the regular predetermined interval based on application requirements. In an embodiment, when the machine 100 includes the controller, the sensor module 108 may also be communicably coupled to the controller. In such an embodiment, the sensor module 108 may send the first signal 110 to the controller. In another embodiment, when the controller is not present, the sensor module 108 may be directly coupled to the engine 104.

The system 100 includes one or more Internet of Things (IoT) module 112. In some examples, the IoT module 112 includes a battery or a cell. The IoT module 112 may be defined as an electronic device embedded in parts that connect to wireless networks for sending and receiving data. Although only one IoT module 112 is illustrated herein, it should be contemplated that the present disclosure may use more than one IoT module 112. Each of the IoT module 112 is communicably coupled to the machine component 106. In an embodiment, the machine component 106 may be associated with more than one IoT module 112. In another embodiment, more than one machine component 106 may be associated with single IoT module 112. Further, each of the IoT modules 112 is communicably coupled with the one or more sensor modules 108 and one other IoT module 112 either directly or indirectly.

The IoT module 112 receives the first signal 110. The IoT module 112 converts the first signal 110 from analog format to digital format to generate a second signal 114. The second signal 114 is a high accuracy signal. In an embodiment, the second signal 114 is indicative of the pressure difference between the inlet pressure and the outlet pressure of the air filter. The IoT module 112 transmits the second signal 114 wirelessly. The IoT module 112 may transmit the second signal 114 through any suitable wireless mode of communication, such as Bluetooth®, Wi-Fi®, internet connectivity, cellular networks, Near Field Communication (NFC), and the like.

The system 100 further includes a mobile device 116. The mobile device 116 may be a cell phone, personal digital assistant, a smartphone, a tablet, a smartwatch, or any other suitable device which may be suitable for application with various aspects of the present disclosure. The mobile device 116 may also facilitate an alert, an audio message, a video message, a vibration alert, or any other such type of an alert to inform a user about a real time health status of the machine component 106. In some examples, the mobile device 116 may be present with an operator of the machine 102.

The mobile device 116 is communicably coupled to the one or more of IoT modules 112. The mobile device 116 receives the second signal 114. The mobile device 116 processes the second signal 114 to determine the real time health status of the machine component 106. In an embodiment, processing the second signal 114 includes calculating a remaining useful life of the machine component 106. The mobile device 116 may be equipped with suitable hardware/software components to execute the processing step. Further, the mobile device 116 may display the real time health status on a display (not shown) associated with the mobile device 116, or any other display means such as another mobile device, a display screen coupled to the mobile device 116, and the like.

The real time health status corresponds to an actual condition of operational health of the machine component 106. The real time health status may be defined based on various parameters which may be specific to a type of the machine component 106 being monitored. The real time health status may include one or more of a remaining useful life, a maintenance time period, a service procedure requirement for the machine component 106, and the like. It should be contemplated that the real time health status of the machine component 106 may include any other such parameter as well, and the present disclosure is not limited by any such parameters.

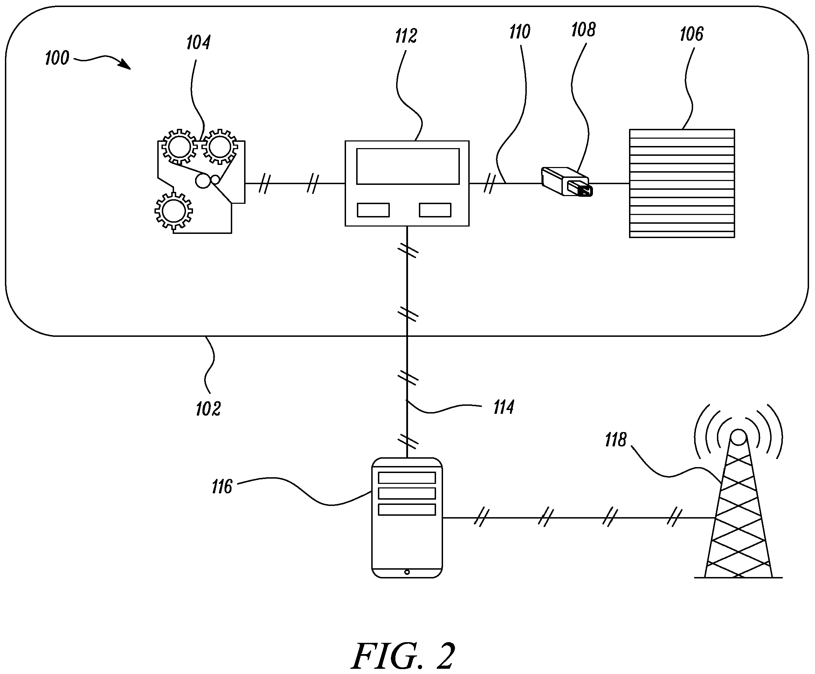

FIG. 2 illustrates another embodiment of the system 100. The system 100 includes the machine 102, the engine 104, the machine component 106, the sensor module 108, the IoT module 112, and the mobile device 116. The sensor module 108 is communicably coupled to the machine component 106. The mobile device 116 is communicably coupled to the IoT module 112. The sensor module 108 generates the first signal 110 indicative of the operational characteristic of the machine component 106. The IoT module 112 receives the first signal 110 and converts the first signal 110 from analog format to digital format to generate the second signal 114. The IoT module 112 transmits the second signal 114 wirelessly. The mobile device 116 receives the second signal 114. The mobile device 116 transmits the second signal 114. The mobile device 116 may transmit the second signal 114 in a wireless manner.

The system 100 further includes a remote server 118. The remote server 118 is communicably coupled to the mobile device 116. The remote server 118 may be any remote facility equipped with capabilities to transmit signals, receive signals, and execute processing steps. The remote server 118 may be a back office, a remote office location, a back-end server, or any other such facility. The remote server 118 receives the second signal 114 from the mobile device 116. The remote server 118 processes the second signal 114 to determine the real time health status of the machine component 106. In an embodiment, processing the second signal 114 includes calculating a remaining useful life of the machine component 106. The remote server 118 may further communicate the processed information to the mobile device 116.

In an embodiment, the mobile device 116 receives the real time health status of the machine component 106 from the remote server 118. The mobile device 116 displays the real time health status of the machine component 106 on the mobile device 116. The real time health status includes one or more of a remaining useful life, a maintenance time period, or a service procedure requirement for the machine component. It should be contemplated that the real time health status of the machine component 106 may include any other such parameter as well, and the present disclosure is not limited by any such parameters.

In an embodiment, the mobile device 116 may store a history of the real time health status of the machine component 106. In another embodiment, the remote server 118 may store the history of the real time health status of the machine component 106. The remote server 118 may provide the mobile device with access to the historical data, if required. In another embodiment, the IoT module 112 may also store the history of the real time health status of the machine component 106. The mobile device 116 may retrieve data from the IoT module 112. The mobile device 116 may use the retrieved data for further processing and analysis. The history of the real time health status of the machine component 106 may include previous failure events, operational data leading up to failure, patterns of operational data indicating potential failure etc. For example, for an air filter, the history may include clogging events, pressure values leading up to clogging event etc.

In another embodiment, the mobile device 116 displays the alert on the mobile device 116 when the real time health status of the machine component 106 is below a pre-determined threshold health status. The mobile device 116 may compare the determined real time health status of the machine component 106 with the pre-determined threshold health status, and display the alert based on the comparison. In an embodiment, the mobile device 116 may display a text message indicating the real time health status of the machine component 106.

In another embodiment, the mobile device 116 suggests the corrective measure to be taken to improve the real time health status of the machine component 106. The mobile device 116 may be suitably provided with the pre-determined threshold health status based on various parameters including operating conditions, historical failure data, specification of the machine component 106, etc. After determining that the real time health status of the machine component 106 is unsatisfactory, or below the pre-determined threshold health status, the mobile device 116 may suggest the corrective measure to be take based on the comparison. The corrective measure may involve a service or maintenance procedure of the machine component 106, replacement of the machine component 106, adjusting operational conditions or parameters of the machine component 106 etc.

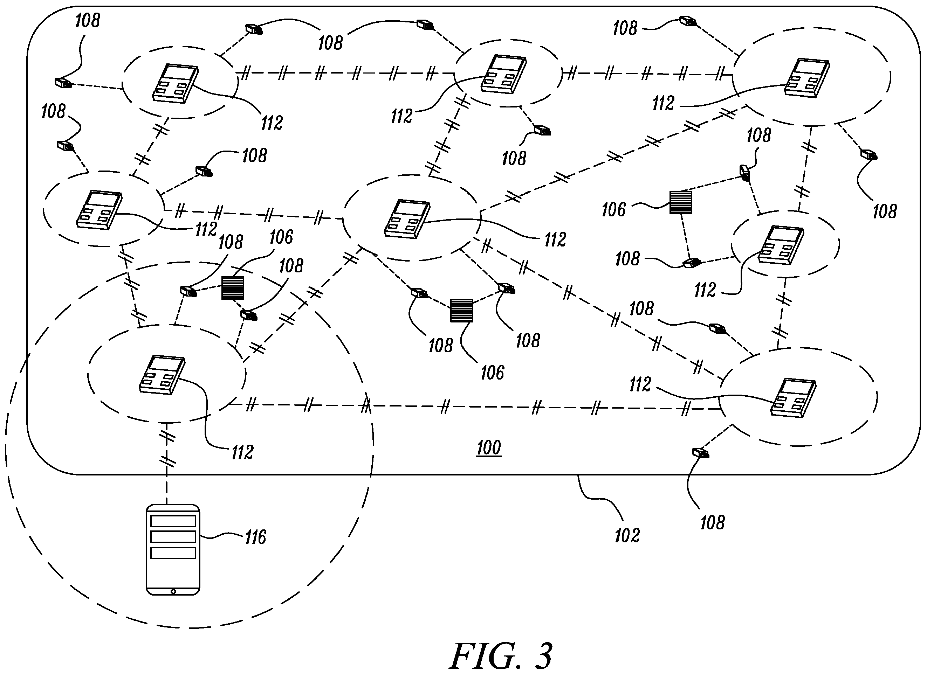

FIG. 3 schematically illustrates the machine 102. The machine 102 includes the system 100 for monitoring the real time health status of the machine components 106. The system 100 includes multiple sensor modules 108 and multiple IoT modules 112. Each sensor module 108 is communicably coupled to at least one machine component 106. In the illustrated embodiment, the machine component 106 is coupled to two sensor modules 108. However, the machine component 106 may be coupled to any number of sensor modules 108. Further, each sensor module 108 is communicably coupled to a corresponding IoT module 112. Furthermore, each IoT module 112 is communicably coupled to a corresponding sensor module 108 and another IoT module 112. In the illustrated example, each IoT module 112 is communicably coupled to two sensor modules 108. The IoT modules 112 create a mesh-type virtual network across the machine 102. The IoT modules 112 are interconnected to each other such that accessing one of the IoT modules 112 may provide access to information being carried by other IoT modules 112.

The mobile device 116 may connect to one or more IoT modules 112 to access relevant information regarding the machine component 106. For example, as illustrated in FIG. 3, the mobile device 116 may have a Bluetooth® connection range shown by a dotted circle. The mobile device 116 may search for available IoT modules 112 within the Bluetooth® connection range and proceed to connect to the available IoT module 112.

An exemplary application scenario may include the operator sitting inside an operator cabin (not shown). It may be counterproductive for the operator to go outside of the operator cabin to check the real time health status of the machine component 106 during an ongoing work cycle. In such a situation, the IoT module 112 may be provided near the operator cabin such that the IoT module 112 may be within a Bluetooth® connection range of the mobile device 116 being carried by the operator. Thus, the operator may access the real time health status of any machine component 106 located across the machine 102 conveniently.

FIG. 4 illustrates another exemplary scenario with respect to the present disclosure. At an exemplary worksite, multiple machine 102 may be working to complete an intended task. Each machine 102 includes one or more sensor modules 108 and one or more IoT module 112. The IoT modules 112 are interconnected to each other irrespective of the machine 102 to which the IoT module 112 is coupled with. Further, In the illustrated example, each machine 102 is communicably coupled to two IoT modules 112. Further, each IoT module 112 is in turn communicably coupled to two sensor modules 108. The IoT module 112 may receive information about the real time health status of the machine component 106 with which the IoT module 112 is coupled through the sensor module 108. Further, the IoT module 112 may receive information about the real time health status of the machine components 106 of other machines 102 through other IoT modules 112.

The mobile device 116 may connect to one of the machines 102 via the respective IoT modules 112 using any suitable wireless connection methods. A user may access information about the real time health status of any machine component 106 coupled with any machine 102 through the mobile device 116 as all the IoT modules 112 are interconnected with each other. Further, the mobile device 116 may be present at the back office or with a personnel in charge of the worksite, without limiting the scope of the present disclosure.

### Industrial Applicability

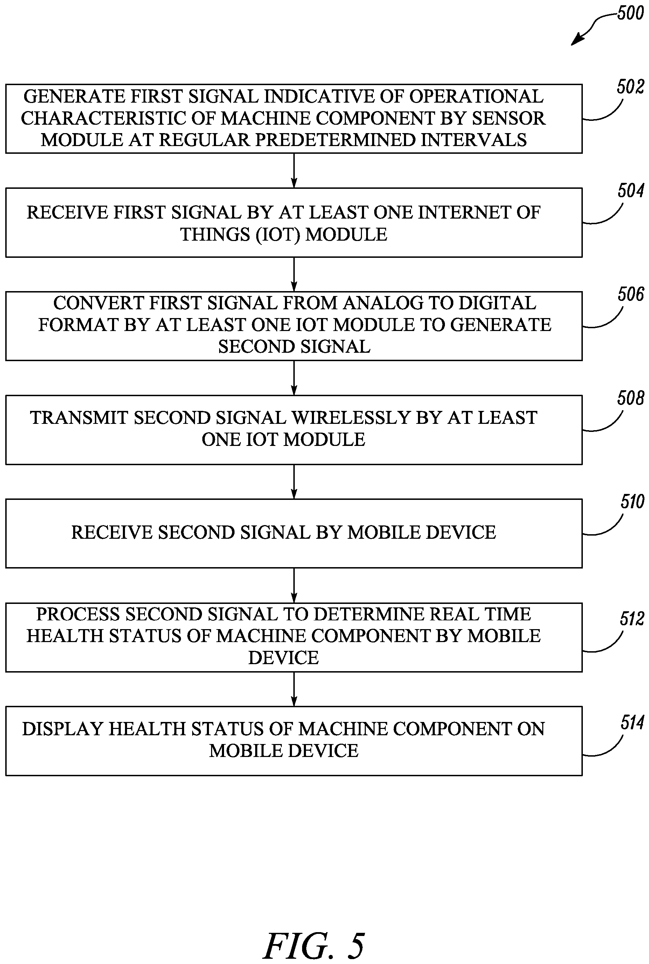

FIG. 5 illustrates a method 500 of monitoring health status of the machine component 106 on the real time basis. The machine component 106 is the air filter of the engine 104, the break wear sensor, and/or the implement wear sensor. At step 502, the sensor module 108 generates the first signal 110 indicative of the operational characteristic of the machine component 106. The sensor module 108 generates the first signal 110 at regular predetermined intervals. At step 504, the Internet of Things (IoT) module 112 receives the first signal 110. At step 506, the IoT module 112 converts the first signal 110 from analog format to digital format to generate the second signal 114.

At step 508, the IoT module 112 transmits the second signal 114 wirelessly. In an embodiment, the second signal 114 is indicative of the pressure difference between the inlet pressure and the outlet pressure of the air filter. At step 510, the mobile device 116 receives the second signal 114. At step 512, the mobile device 116 processes the second signal 114 to determine the real time health status of the machine component 106. In an embodiment, processing the second signal 114 includes calculating the remaining useful life of the machine component 106. In another embodiment, the IoT module 112 may also perform the processing step. In such case, the mobile device 116 may be used as a display unit. At step 514, the mobile device 116 displays the real time health status of the machine component 106 on the mobile device 116. In an embodiment, the real time health status may include the remaining useful life, the maintenance time period, and/or the service procedure requirement for the machine component 106.

Further, in some embodiments, the mobile device 116 sends the second signal 114 to the remote server 118. Further, the remote server 118 processes the second signal 114 to determine the real time health status of the machine component 106. In an embodiment, processing the second signal 114 includes calculating a remaining useful life of the machine component 106. The method 500 may further include receiving the real time health status of the machine component 106 from the remote server 118 by the mobile device 116. The method 500 may further include displaying the real time health status of the machine component 106 on the mobile device 116 by the mobile device 116.

The present disclosure provides the system 100 and the method 500 to monitor the health status of the machine component 106 in real time. The real time health status information provided by the system 100 can be used to provide alerts or suggest corrective measures to be taken. The corrective measures may include service requirement, replacement requirement, or any other measure which needs to be taken to improve the functioning health of the machine component 106 or eliminate machine downtime. It should be noted that the system 100 may include any type of sensor which can provide analog, digital, pulse width modulation, or current output signals during operation of machine operation. Further, data collected may be forwarded to back office for behavioral analysis of sensor operation. This analysis may further be used for maintenance/service/repair requirements.

The mobile device 116 may have a mobile application installed therein. Such a mobile application may be used to monitor the real time health status of one or more machine components 106. For example, a machine may have multiple engine air filters. Such air filters may be indexed on the mobile application with respective identifiers. Further, a user may get notified about the real time health status through the mobile device 116 via a text message or any other visual indication techniques, audio alert, vibration alert, or any other such alert. Further, the mobile device 116 may also suggest corrective measures to be taken for maintaining health of the air filters. Numerous such applications of the present disclosure may be extended to various type of machine components. Thus, the present disclosure facilitates proactive approach of monitoring the real time health status of any machine component 106.

The present disclosure further provides ease of installation of the solution described herein. The IoT modules 112 may have complementary connection terminals so that the IoT modules 112 may be connected between the sensor module 108 and the controller. In the embodiments, when there is no controller, the IoT module 112 may have appropriate connection terminals to connect to an intermediate component that is coupled to the sensor module 108. Thus, the IoT module 112 may act as a retrofittable aftermarket solution. In an embodiment, the IoT module 112 may be provided with backup battery arrangement to ensure that even when the time the machine 102 is not operational, the user may access the real time health status of various machine components 106.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A method of monitoring health status of a machine component on a real time basis, the method comprising:
generating, by at least one sensor module, a first signal indicative of an operational characteristic of the machine component at regular predetermined intervals;
receiving, by at least one Internet of Things (IoT) module, the first signal;
converting, by the at least one IoT module, the first signal from analog format to digital format to generate a second signal;
transmitting, by the at least one IoT module, the second signal wirelessly;
receiving, by a mobile device, the second signal;
processing, by the mobile device, the second signal to determine a real time health status of the machine component; and
displaying, by the mobile device, the real time health status of the machine component on the mobile device.

2. The method of claim 1, further including:
sending, by the mobile device, the second signal to a remote server; and
processing, at the remote server, the second signal to determine the real time health status of the machine component.

3. The method of claim 1, further including:
displaying, by the mobile device, an alert when on the mobile device the real time health status of the machine component is below a pre-determined threshold health status.

4. The method of claim 1, wherein processing the second signal includes calculating a remaining useful life of the machine component.

5. The method of claim 1, wherein the real time health status includes one or more of a remaining useful life, a maintenance time period, and a service procedure requirement for the machine component.

6. The method of claim 1, further including:
suggesting, by the mobile device, a corrective measure to be taken to improve the real time health status of the machine component.

7. The method of claim 1, wherein the machine component is one or more of an air filter of an engine, a break wear sensor, and an implement wear sensor.

8. The method of claim 7, wherein the second signal is indicative of a pressure difference between an inlet pressure and an outlet pressure of the air filter.

9. A system for monitoring health status of one or more machine components of a machine on a real time basis, the system comprising:
the one or more machine components, each of the one or more machine components having an associated operational characteristic;
at least one sensor module communicably coupled to each of the one of more machine components, the sensor module configured to generate a first signal at regular predetermined intervals indicative of the operational characteristic;
one or more IoT modules communicably coupled to each other either directly or indirectly, each of the one or more IoT modules communicably coupled with the at least one sensor module, each of the one or more IoT modules configured to:
receive the first signal;
convert the first signal from analog format to digital format to generate a second signal; and
transmit the second signal wirelessly; and
a mobile device communicably coupled to any one of the one or more IoT modules, the mobile device configured to:
receive the second signal;
process the second signal to determine a real time health status of the machine component; and
display the real time health status of the machine component on the mobile device.

10. The system of claim 9, wherein the machine component is one or more of an air filter of an engine, a break wear sensor, and an implement wear sensor.

11. The system of claim 9, further including:
displaying, by the mobile device, an alert when on the mobile device the real time health status of the machine component is below a pre-determined threshold health status.

12. The system of claim 9, further including a remote server communicably coupled to the mobile device, the remote server configured to:
receive the second signal from the mobile device; and
process the second signal to determine the real time health status of the machine component.

13. The system of claim 9, wherein the mobile device is further configured to:
receive the real time health status of the machine component from the remote server; and
display the real time health status of the machine component on the mobile device.

14. The system of claim 9, wherein the real time health status includes one or more of a remaining useful life, a maintenance time period, a service procedure requirement for the machine component.

15. A machine comprising:
a plurality of ground engaging members;
a frame supported over the plurality of ground engaging members;
one or more machine components having an associated operational characteristic; and
a system for monitoring health status of the one or more machine components on a real time basis, the system comprising:
at least one sensor module communicably coupled to the machine component, the sensor module configured to generate a first signal indicative of the operational characteristic at regular pre-determined intervals;
one or more IoT modules, each of the one or more IoT modules communicably coupled with the at least one sensor module and at least one other IoT module either directly or indirectly, each of the one or more IoT modules configured to:
receive the first signal;
convert the first signal from analog format to digital format to generate a second signal; and
transmit the second signal wirelessly; and
a mobile device communicably coupled to each of the one or more IoT modules, the mobile device configured to:
receive the second signal;
process the second signal to determine a real time health status of the machine component; and
display the real time health status of the machine component on the mobile device.

16. The machine of claim 15, wherein the machine component is one or more of an air filter of an engine, a break wear sensor, and an implement wear sensor.

17. The machine of claim 15, wherein the system is further configured to:
store, by the mobile device, a history of the real time health status of the machine component on the mobile device.

18. The machine of claim 15, wherein the system further includes a remote server communicably coupled to the mobile device, the remote server configured to:
receive the second signal from the mobile device; and
process the second signal to determine the real time health status of the machine component.

19. The machine of claim 15, wherein the mobile device is further configured to:
receive the real time health status of the machine component from the remote server; and
display the real time health status of the machine component on the mobile device.

20. The machine of claim 15, wherein the real time health status includes one or more of a remaining useful life, a maintenance time period, a service procedure requirement for the machine component.
